(19) Europäisches Patentamt
European Patent Office
Office européen des brevets

(11) EP 2 940 093 B1

(12) EUROPEAN PATENT SPECIFICATION

(45) Date of publication and mention of the grant of the patent:
**22.11.2017 Bulletin 2017/47**

(21) Application number: **13866780.3**

(22) Date of filing: **25.12.2013**

(51) Int Cl.:
***C09J 163/00*** *(2006.01)* ***C09J 9/02*** *(2006.01)*
***C09J 11/04*** *(2006.01)* ***C09J 11/06*** *(2006.01)*
***H01B 1/00*** *(2006.01)* ***H01B 1/22*** *(2006.01)*
***C09D 5/00*** *(2006.01)*

(86) International application number:
**PCT/JP2013/084552**

(87) International publication number:
**WO 2014/104046 (03.07.2014 Gazette 2014/27)**

(54) **THERMALLY-CONDUCTIVE, ELECTRICALLY-CONDUCTIVE ADHESIVE COMPOSITION**
WÄRMELEITFÄHIGE UND ELEKTRISCH LEITFÄHIGE KLEBSTOFFZUSAMMENSETZUNG
COMPOSITION ADHÉSIVE ÉLECTROCONDUCTRICE ET THERMOCONDUCTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2012 JP 2012284866**

(43) Date of publication of application:
**04.11.2015 Bulletin 2015/45**

(73) Proprietors:
- **Kansai University**
  **Suita-shi, Osaka 564-8680 (JP)**
- **Tanaka Kikinzoku Kogyo K.K.**
  **Chiyoda-ku**
  **Tokyo 100-6422 (JP)**

(72) Inventors:
- **MITSUKAZU Ochi**
  **Suita-shi**
  **Osaka 564-8680 (JP)**
- **IRIFUNE Akira**
  **Suita-shi**
  **Osaka 564-8680 (JP)**
- **ICHIKAWA Natsuko**
  **Suita-shi**
  **Osaka 564-8680 (JP)**
- **HARADA Miyuki**
  **Suita-shi**
  **Osaka 564-8680 (JP)**
- **FURUSHO Rikia**
  **Hiratsuka-shi**
  **Kanagawa 254-0021 (JP)**
- **KONDO Takeshi**
  **Hiratsuka-shi**
  **Kanagawa 254-0021 (JP)**
- **OKUDA Akihiko**
  **Hiratsuka-shi**
  **Kanagawa 254-0021 (JP)**

(74) Representative: **Cabinet Armengaud Aîné**
**16, rue Gaillon**
**75002 Paris (FR)**

(56) References cited:
**EP-A2- 0 171 157**
**EP-A2- 0 937 763**
**WO-A2-2010/093598**
**DE-A1- 4 012 061**
**JP-A- H0 196 278**
**JP-A- 2004 359 830**
**JP-A- 2012 052 051**
**US-A- 4 604 230**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 940 093 B1

## Description

### Field

The present invention relates to a thermally conductive, electrically conductive adhesive composition. More specifically, the present invention relates to a thermally conductive, electrically conductive adhesive composition having excellent heat dissipation properties for use as a bonding material (a die-bonding material) to bond a semiconductor device to a lead frame, a substrate, or the like.

### Background

In recent years, demand is rapidly increasing for electronic components, such as power devices and light-emitting diodes (LEDs), that are smaller in size and enhanced in functionality. Power devices as a semiconductor device to reduce power loss and convert power with high efficiency are increasingly achieving widespread use in the fields of electric vehicles, hybrid electric vehicles, quick chargers, and the like and are also expected to be increasingly demanded in the field of new energy such as the fields of solar power systems and mega solar systems.

LED devices have advantages such as a long service life, a small size, and low power consumption compared with an incandescent bulb, and therefore use of LED devices is rapidly spreading in various fields such as the fields of lighting, mobile phones, liquid crystal panels, automobiles, traffic lights, street lights, and image displays.

Along with such a trend toward a smaller size and higher functionality of an electronic component, the level of heat generation by a semiconductor device is increasing. When placed in a high-temperature environment for a prolonged period of time, an electronic component loses its inherent functions and reduces its service life. Because of this, a bonding material for use in die bonding (a die-bonding material) usually has excellent heat dissipation properties so as to efficiently dissipate heat generated by a semiconductor device. Usually, depending on the applications, the bonding material is required to have a function to transfer heat generated by a semiconductor device to a substrate or a cabinet with high efficiency and is therefore required to have excellent heat dissipation properties.

Because excellent heat dissipation properties are thus required, high-temperature lead solder containing a high proportion of lead and gold-tin solder containing a high proportion of gold have been conventionally used widely as a bonding material for an electronic component. High-temperature lead solder, however, contains lead that is considered as hazardous to humans, which presents a problem. Therefore, recently, lead-free techniques are increasingly developed and active research on switching to lead-free solder are being conducted. On the other hand, gold-tin solder contains gold that is expensive, which presents a problem regarding cost.

Based on the above circumstances, as a promising candidate for a material to replace high-temperature lead solder and gold-tin solder, an isotropic, electrically conductive adhesive (hereinafter, simply called "an electrically conductive adhesive") has been receiving attention in recent years. An electrically conductive adhesive is a composite of a metal particle having functions such as electrical conductivity (silver, nickel, copper, aluminum, or gold, for example) and an organic adhesive that functions as adhesive (an epoxy resin, a silicone resin, an acrylic resin, or a urethane resin, for example), in which the kind of the metal particle and the kind of the organic adhesive vary. The electrically conductive adhesive is easy to use because of its liquid state at room temperature, is free of lead, and is inexpensive and therefore makes a promising candidate for a material to replace high-temperature lead solder and gold-tin solder. Therefore, the market of the electrically conductive adhesive is predicted to expand significantly.

As described above, an electrically conductive adhesive as a material to replace solder is required to have electrical conductivity and excellent heat dissipation properties. An organic adhesive used to form the electrically conductive adhesive is inherently low in thermal conductivity compared with metal and therefore is imparted with heat dissipation properties by a thermally conductive filler added thereto. Minimizing the thermal resistance of the electrically conductive adhesive and effectively dissipating heat that is generated are the focus of technical development regarding electrically conductive adhesives.

As a conventional electrically conductive adhesive having improved thermal conductivity, for example, Patent Literature 1 discloses a composition having high thermal conductivity and electrical conductivity, the composition containing at least, as solid components of the composition, 5 to 80% by weight of a pitch graphitized carbon fiber filler having an average fiber diameter of 0.1 to 30 μm, an aspect ratio of 2 to 100, an average fiber length of 0.2 to 200 μm, and true density of 2.0 to 2.5 g/cc, 15 to 90% by weight of a fine-particle metal filler having an average particle diameter of 0.001 to 30 μm, and 5 to 50% by weight of a binder resin.

In addition, Patent Literature 2 discloses an electrically conductive composition containing an epoxy resin as a base resin, a phenolic curing agent as a curing agent, a urethane-modified epoxy resin as a flexibility-imparting agent, and a powder of, for example, gold, silver, copper, iron, aluminum, aluminum nitride, alumina, and/or crystalline silica as a thermally conductive filler.

Furthermore, Patent Literature 3 reports an adhesive containing a resin component, a fibrous filler having high

thermal conductivity, and a spherical filler having high thermal conductivity that contains at least one kind selected from the group consisting of silver, gold, platinum, aluminum nitride, silicon oxide, aluminum oxide, and carbon black, in which the content of the fibrous filler having high thermal conductivity is 0.1 to 20 parts by volume and the content of the spherical filler having high thermal conductivity is 10 to 200 parts by volume relative to 100 parts by volume of the resin component.

**Citation List**

Patent Literature

Patent Literature 1: Japanese Patent Application Publication No. 2008-186590 (JP 2008-186590 A)
Patent Literature 2: Japanese Patent Application Publication No. H6-322350 (JP H6-322350 A)
Patent Literature 3: Japanese Patent Application Publication No. 2009-84510 (JP 2009-84510 A)

**Summary**

**Technical Problem**

As described above, with the trend being driven toward a smaller size and higher functionality of electronic components, taking appropriate measures regarding heat dissipation is crucial, and electrically conductive adhesives having both heat dissipation properties and electrical conductivity remain to be developed.
Here, the present invention has an object to provide a thermally conductive, electrically conductive adhesive composition having high thermal conductivity and consistent electrical conductivity for use as a die-bonding material.

Solution to Problem

The inventors of the present invention conducted studies to achieve the object. They focused attention on a curing agent, in particular, among the components forming an electrically conductive adhesive composition and, as a result, found that use of a specific curing agent can give a high thermal conductivity. Thus, the present invention has now been completed.
Namely, the present invention provides a thermally conductive, electrically conductive adhesive composition according to claim 1 including:

(A) an electrically conductive filler,
(B) an epoxy resin, and
(C) a curing agent,

the electrically conductive filler (A) being a submicron fine silver powder, and the content of the fine silver powder being 75 to 94% by mass of the total amount of the thermally conductive, electrically conductive adhesive composition,
the content of the epoxy resin (B) being 5 to 20% by mass of the total amount of the thermally conductive, electrically conductive adhesive composition,
the curing agent (C) being a compound of Formula (I), (II), or (III), and the content of the compound being 0.4 to 2.4 molar equivalents in terms of equivalent of active hydrogen relative to 1 molar equivalent of epoxy groups in the epoxy resin (B), and
during heat curing and before the electrically conductive filler (A) starts to sinter, the thermally conductive, electrically conductive adhesive composition being in an uncured state or a half-cured state:

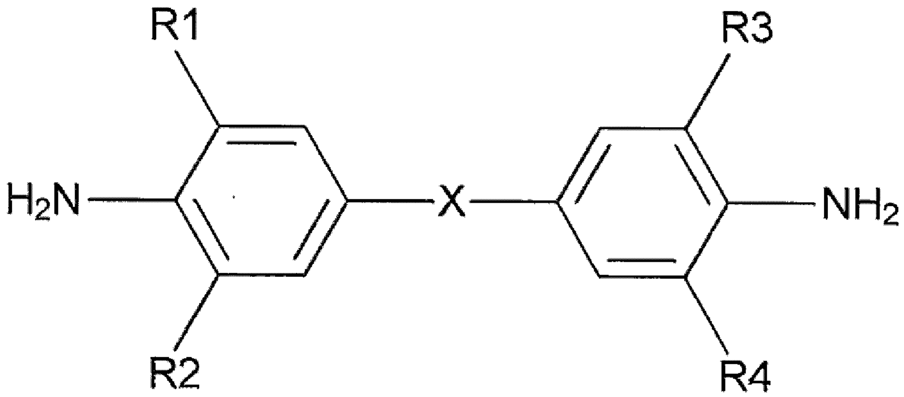

(I)

(in which X is $-SO_2-$, $-CH_2-$, or -O-, and R1 to R4 are independently a hydrogen atom or a lower alkyl group),

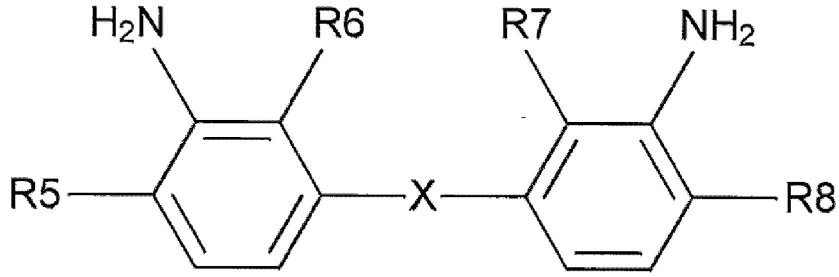

(II)

(in which X is $-SO_2-$, $-CH_2-$, or -O-, and R5 to R8 are independently a hydrogen atom or a lower alkyl group), and

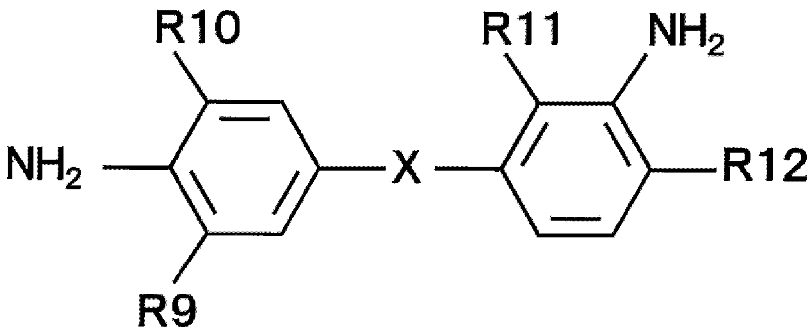

(III)

(in which X is $-SO_2-$, $-CH_2-$, or -O-, and R9 to R12 are independently a hydrogen atom or a lower alkyl group).

**Advantageous Effects of Invention**

The present invention provides a thermally conductive, electrically conductive adhesive composition having excellent heat dissipation properties and consistent electrical conductivity, at low cost.

**Description of Embodiments**

A thermally conductive, electrically conductive adhesive composition (hereinafter, simply called "an adhesive composition") of the present invention contains an electrically conductive filler (A), an epoxy resin (B), and a curing agent (C), as described above, as essential components. The reason why the adhesive composition of the present invention has excellent heat dissipation properties is not necessarily clear but is speculated that, because of the lowered curing rate of the adhesive composition, distribution of the electrically conductive filler within the epoxy resin as a binder resin is improved than normal and, as a result, necking of the electrically conductive filler is promoted to allow the dispersed electrically conductive filler to fuse with each other during heat curing and consequently to form an adequate network of electrically conductive fillers to transmit heat.

In the following, the components, namely, the electrically conductive filler (A), the epoxy resin (B), and the

curing agent (C) are described in detail.

As the electrically conductive filler (A), a submicron-sized (namely, smaller than 1 μm) fine silver powder is used. According to the present invention the average particle diameter of the fine silver powder is 300 to 900 nm and is preferably 400 to 800 nm. When the average particle diameter is smaller than 300 nm, agglomeration force of the fine silver powder increases to significantly decrease the dispersibility and, as a result, the fine silver powder may readily agglomerate after preparation of the adhesive composition or crystal growth due to sintering may proceed excessively during heat curing. Consequently, adequate electrical conductivity or adequate thermal conductivity may not be obtained. On the other hand, when the average particle diameter is higher than 900 nm, not only the fine silver powder in the epoxy resin decreases in number but also crystal growth due to sintering does not proceed properly and, as a result, adequate electrical conductivity or adequate thermal conductivity may not be obtained.

In the present invention, the average particle diameter of the fine silver powder as the electrically conductive filler (A) is determined by the following method. A portion of the adhesive composition is taken and photographed using a field emission scanning electron microscope (JMS-6700F, manufactured by JEOL Datum, Ltd.), followed by projection of the picture. From the adhesive composition in the picture, 100 silver particles are randomly selected to compute the projected area diameters (outer diameters) thereof, and the average value of these projected area diameters is defined as the average particle diameter of the fine silver powders.

The shape of the fine silver powder is not particularly limited. Examples of the shape include a spherical shape, a flaky shape, a leaf-like shape, and a dendritic shape, and a flaky shape or a spherical shape is generally selected. The fine silver powder can be a pure silver powder, a metal particle coated with silver on the surface, or a mixture of these. The fine silver powder can be a commercially available product or prepared by a known method. The method for preparing the fine silver powder is not particularly limited, and any method, for example, mechanical milling, reduction, electrolysis, or the vapor phase process, is employed.

According to the present invention the submicron fine silver powder as the electrically conductive filler (A) is coated with a coating agent on the surface, and the coating agent contains a carboxylic acid. By using a coating agent containing a carboxylic acid, the heat dissipation properties of the adhesive composition can be further improved. This is possibly because the action of the curing agent (C) used in the present invention to release the coating agent from the surface of the fine silver powder, combined with the lowered curing rate of the adhesive composition of the present invention, further promotes the electrically conductive filler to fuse with each other.

The carboxylic acid contained in the coating agent is not particularly limited and examples thereof include monocarboxylic acids, polycarboxylic acids, and oxycarboxylic acids.

Examples of the monocarboxylic acids include aliphatic monocarboxylic acids having 1 to 24 carbon atoms such as acetic acid, propionic acid, butyric acid, valeric acid, caprylic acid, caproic acid, capric acid, lauric acid, myristic acid, palmitic acid, stearic acid, arachidic acid, behenic acid, and lignoceric acid. Unsaturated aliphatic carboxylic acids having 4 to 24 carbon atoms such as oleic acid, linoleic acid, α-linolenic acid, γ-linolenic acid, dihomo-γ-linolenic acid, elaidic acid, arachidonic acid, erucic acid, nervonic acid, stearidonic acid, eicosapentaenoic acid, and docosahexaenoic acid may also be used. Aromatic monocarboxylic acids having 7 to 12 carbon atoms such as benzoic acid and naphthoic acid can also be used.

Examples of the polycarboxylic acids include aliphatic polycarboxylic acids having 2 to 10 carbon atoms such as oxalic acid, malonic acid, succinic acid, glutaric acid, adipic acid, azelaic acid, and sebacic acid; aliphatic unsaturated polycarboxylic acids having 4 to 14 carbon atoms such as maleic acid, fumaric acid, itaconic acid, sorbic acid, and tetrahydrophthalic acid; and aromatic polycarboxylic acids such as phthalic acid and trimellitic acid.

Examples of the oxycarboxylic acids include aliphatic hydroxymonocarboxylic acids such as glycolic acid, lactic acid, oxybutyric acid, and glyceric acid; aromatic hydroxymonocarboxylic acids such as salicylic acid, oxybenzoic acid, and gallic acid; and hydroxypolycarboxylic acids such as tartaric acid, citric acid, and malic acid.

In the coating agent to treat the surface of the fine silver powder, a higher fatty acid having 10 or more carbon atoms or a derivative of the higher fatty acid can be formulated so as to reduce agglomeration of the fine silver powder. As the higher fatty acid, lauric acid, myristic acid, palmitic acid, stearic acid, oleic acid, linoleic acid, linolenic acid, and lignoceric acid are exemplified. As the derivative of the higher fatty acid, metal salts of the higher fatty acids, esters of the higher fatty acids, and amides of the higher fatty acids are exemplified.

The carboxylic acid contained in the coating agent may be a mixture of two or more kinds of the carboxylic acids exemplified above. Among the carboxylic acids exemplified above, a higher fatty acid, namely, a saturated fatty acid or an unsaturated fatty acid having 12 to 24 carbon atoms is preferable.

Coating the surface of the fine silver powder with the coating agent may be performed by a known method such as a method of stirring and kneading the fine silver powder with the coating agent in a mixer and a method of impregnating the fine silver powder with a solution of the carboxylic acid and then allowing solvent to be volatilized.

The content of the fine silver powder in the electrically conductive filler (A) is within the range of 75 to 94% by mass of the total amount of the adhesive composition of the present invention. When the content is lower than 75% by mass, consistent electrical conductivity or consistent thermal conductivity may not be obtained, and when the content

is higher than 94% by mass, low viscosity and adequate adhesive strength may be difficult to obtain.

In the adhesive composition of the present invention, an additional electrically conductive filler can be concurrently used provided that the effects of the present invention are not impaired. Such an electrically conductive filler is not particularly limited provided that it has electrical conductivity, and is preferably a metal, a carbon nanotube, or the like. As the metal, a powder of any metal generally regarded as an electrically conductive material can be used. Examples include elementary substances such as nickel, copper, silver, gold, aluminum, chromium, platinum, palladium, tungsten, and molybdenum, alloys of two or more kinds of these metals, coated products of these metals, and compounds of these metals having excellent electrical conductivity.

The epoxy resin (B) is a compound having two or more epoxy groups per molecule, and is a liquid epoxy resin. The liquid epoxy resin may be used alone or as a combination of two or more of these. As specific examples of the liquid epoxy resin, condensates of epichlorohydrin with a polyphenol such as bisphenols or with a polyhydric alcohol can be exemplified. Examples of the condensates include glycidyl ether epoxy resins such as bisphenol A epoxy resins, brominated bisphenol A epoxy resins, hydrogenated bisphenol A epoxy resins, bisphenol F epoxy resins, bisphenol S epoxy resins, bisphenol AF epoxy resins, biphenyl epoxy resins, naphthalene epoxy resins, fluorene epoxy resins, novolac epoxy resins, phenol novolac epoxy resins, o-cresol novolac epoxy resins, tris(hydroxyphenyl) methane epoxy resins, and tetraphenylol ethane epoxy resins. In addition, glycidyl ester epoxy resins obtained by condensation of epichlorohydrin with a carboxylic acid such as phthalic acid derivatives and fatty acids, glycidyl amine epoxy resins obtained by a reaction of epichlorohydrin with an amine, a cyanuric acid, or a hydantoin, and epoxy resins modified by various methods are also exemplified. However, the liquid epoxy resin is not limited to these. Bisphenol epoxy resins are particularly preferable and, among these, bisphenol A epoxy resins and bisphenol F epoxy resins are particularly preferable.

The content of the epoxy resin (B) is 5 to 20% by mass of the total amount of the adhesive composition of the present invention. When the content is lower than 5% by mass, adhesion force decreases to potentially impair reliability in connectivity, while when the content is higher than 20% by mass, sintering of the electrically conductive filler is less prone to form a network and, as a result, consistent electrical conductivity or consistent thermal conductivity may not be obtained.

The curing agent (C) is a compound of Formula (I), (II), or (III). The curing agent (C) may be used alone or as a combination of two or more of these. By selecting an appropriate compound from the group of the compounds of Formulae (I), (II), and (III), the curing ratio of the adhesive composition can be controlled as needed. In the present invention, examples of a lower alkyl group include linear, branched, or cyclic alkyl groups having 1 to 6 carbon atoms. Among these, linear or branched alkyl groups having 1 to 3 carbon atoms are preferable, and a methyl group and an ethyl group are particularly preferable. Among the compounds described above, diaminodiphenyl sulfone that is a compound from the group of the compounds of Formulae (I), (II), and (III) in which X is $-SO_2-$ and a derivative thereof are particularly preferable because an appropriate level of effect to delay curing is obtained and interaction thereof with the electrically conductive filler promotes growth of crystals formed by sintering of the electrically conductive filler and formation of a network. Furthermore, 4,4'-diaminodiphenyl sulfone and 3,3'-diaminodiphenyl sulfone are suitable because both of these exhibit the effect described above to the greatest extent. An additional known curing agent may be concurrently used provided that the effects of the present invention are not impaired.

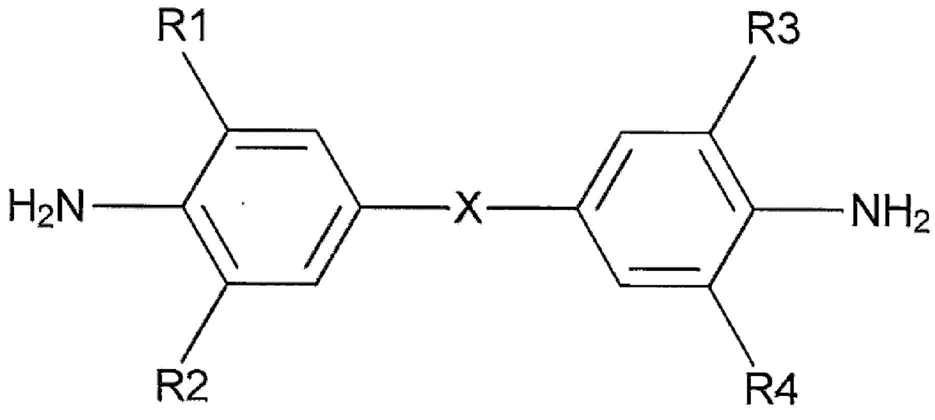

(I)

(In which X is $-SO_2-$, $-CH_2-$, or -O-, and R1 to R4 are independently a hydrogen atom or a lower alkyl group.)

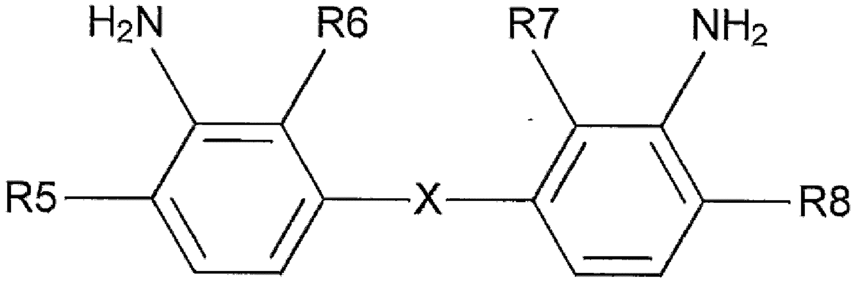

(II)

(In which X is $-SO_2-$, $-CH_2-$, or -O-, and R5 to R8 are independently a hydrogen atom or a lower alkyl group.)

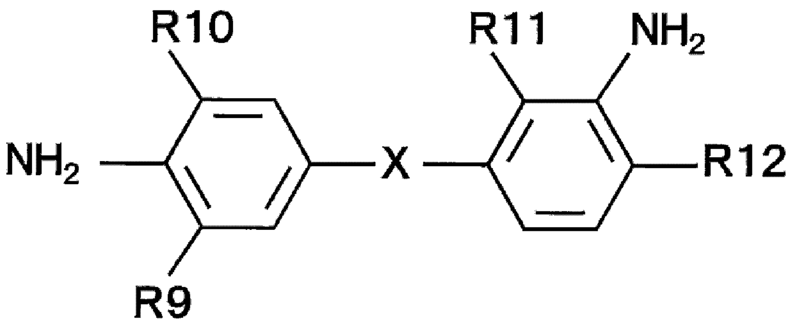

(III)

(In which X is $-SO_2-$, $-CH_2-$, or -O-, and R9 to R12 are independently a hydrogen atom or a lower alkyl group.)

The content of the compound used as the curing agent (C) is 0.4 to 2.4 molar equivalents and preferably 0.6 to 2.0 molar equivalents in terms of equivalent of active hydrogen relative to 1 molar equivalent of epoxy groups in the epoxy resin (B). When the content of the compound is lower than 0.4 molar equivalent in terms of equivalent of active hydrogen, curing proceeds inadequately to potentially impair heat resistance or thermal conductivity may be impaired even though curing proceeds adequately. When the content is higher than 2.4 molar equivalents, curing proceeds inadequately to potentially impair heat resistance or high elasticity required for an adhesive agent may not be obtained even though curing proceeds adequately. In the present invention, the number of equivalent of active hydrogen is calculated as the number of active hydrogen atoms on the nitrogen atom of an amino group in the compound used as the curing agent. The compound has two amino groups per molecule and thus contains four active hydrogen atoms per molecule. Therefore, 1 mol of the compound used as the curing agent of the present invention has 4 molar equivalents of active hydrogen.

The adhesive composition of the present invention needs to be in an uncured state or a half-cured state during heat curing and before the electrically conductive filler (A) starts to sinter. When the adhesive composition is in a thoroughly cured state during heat curing and before the electrically conductive filler (A) starts to sinter, excellent thermal conductivity is not obtained.

The expression "during heat curing and before the electrically conductive filler (A) starts to sinter" refers to the state after heating starts for heat curing of the adhesive composition and before the electrically conductive filler (A) starts to sinter and the average particle diameter thereof starts to increase. The uncured state of the adhesive composition refers to the state at which the adhesive composition substantially as a whole dissolves in a solvent (tetrahydrofuran) that can dissolve the adhesive composition. The half-cured state of the adhesive composition refers to the state at which curing of the adhesive composition has proceeded half way through and can proceed further. In the half-cured state, the adhesive composition partly dissolves in a solvent (tetrahydrofuran) that can dissolve the adhesive composition.

In the present invention, during heat curing and after the electrically conductive filler (A) starts to sinter, the curing ratio of the adhesive composition of the present invention at the time when the growth rate of the average particle diameter of the electrically conductive filler reaches 30% is particularly preferably 50% or lower. When the curing ratio is higher than 50%, high thermal conductivity may not be obtained.

The growth rate of the average particle diameter of the electrically conductive filler (A) refers to a rate of increase of the average particle diameter and is determined by calculation by the following formula, in which the value (a) is the average particle diameter of the electrically conductive filler (A) before heating and the value (b) is the average particle diameter of the electrically conductive filler in the adhesive composition that is being cured by heat, both of these values being obtained through the measurement of the average particle diameter described above.

$$\text{Growth rate of average particle diameter of electrically conductive filler (\%)} = \{(b-a)/a\} \times 100$$

In the present invention, the curing ratio refers to a value obtained by taking out a portion of the adhesive composition at a certain point in time (the weight (W0) thereof before solvent extraction and from which the weight of the electrically conductive filler has been subtracted is measured), performing dissolution and extraction with tetrahydrofuran, drying, measuring the weight (Wt) of the undissolved matter from which the weight of the electrically conductive filler has been subtracted, and performing calculation by the following formula. Here, a curing ratio of 0% corresponds to an uncured state where no curing has occurred and a curing ratio of 100% corresponds to a thoroughly cured state.

$$\text{Curing ratio (\%)} = (Wt/W0) \times 100$$

In the present invention, by using an epoxy curing agent, the curing ratio of the adhesive composition can be controlled as needed. Examples of the epoxy curing agent include curing catalysts such as resol-type phenolic resins, novolac-type phenolic resins, acid anhydrides, tertiary amines, and triphenylphosphines, curing agents of anionic polymerization type such as dicyandiamides, hydrazines, and aromatic diamines, and organic peroxides and, among these, resol-type phenolic resins are particularly preferable. A resol-type phenolic resin is a resin produced through a reaction of a phenol and an aldehyde, and its hydroxy group reacts with an epoxy group of an epoxy resin to make the molecular chain of the epoxy resin crosslinked to cause curing, which is a function of the resol-type phenolic resin. The epoxy curing agent may be used alone or as a combination of two or more of these.

The content of the resol-type phenolic resin is not limited and may be determined as appropriate depending on, for example, the kind and the amount of the epoxy resin. The content of the resol-type phenolic resin, when used, is generally 0.1 to 4.0% by mass of the total amount of the adhesive composition of the present invention.

In the adhesive composition of the present invention, a curing accelerator can also be formulated. As the curing accelerator, imidazoles such as 2-phenyl-4,5-dihydroxymethylimidazole, 2-phenyl-4-methyl-5-hydroxymethylimidazole, 2-methyl-4-methylimidazole, and 1-cyano-2-ethyl-4-methylimidazole, tertiary amines, triphenylphosphines, urea compounds, phenols, alcohols, carboxylic acids, and the like are exemplified. The curing accelerator may be used alone or as a combination of two or more of these.

The content of the curing accelerator is not limited and may be determined as appropriate. The content of the curing accelerator, when used, is generally 0.1 to 2.0% by mass of the total amount of the adhesive composition of the present invention.

In the adhesive composition of the present invention, a solvent can also be formulated. As the solvent, organic solvents such as butyl carbitol, butyl carbitol acetate, ethyl carbitol, ethyl carbitol acetate, butyl cellosolve, butyl cellosolve acetate, ethyl cellosolve, ethyl cellosolve acetate, $\gamma$-butyrolactone, isophorone, glycidyl phenyl ether, and triethylene glycol dimethyl ether are exemplified. The solvent may be used alone or as a combination of two or more of these.

The content of the solvent is not limited and may be determined as appropriate. The content of the solvent, when used, is generally 0.1 to 5.0% by mass of the total amount of the adhesive composition of the present invention.

In the adhesive composition of the present invention, an additional additive such as an antioxidant, an ultraviolet absorber, a tackifier, a dispersant, a coupling agent, an agent to give strength and toughness, and an elastomer can be formulated, as appropriate, provided that the effects of the present invention are not impaired.

The adhesive composition of the present invention can be obtained by mixing and stirring the component (A), the component (B), the component (C), and other components in any order. As the method of dispersion, a twin roll, a triple roll, a sand mill, a roller mill, a ball mill, a colloid mill, a jet mill, a bead mill, a kneader, a homogenizer, a propellerless mixer, or the like can be employed.

## Example

The present invention will be described in more detail by examples. The scope of the present invention, however, is not limited to these examples.

[Examples 1 to 8, Comparative Examples 1 to 4]

A. Preparation of adhesive composition

The ingredients shown in Table 1 were kneaded in a triple roll to prepare an adhesive composition having a composition shown in Table 1 (the numerical value for each ingredient is the value % by mass to the total mass of the adhesive composition). The ingredients used were as follows.

[Electrically conductive filler]

- Flaky silver powder (after surface treatment with stearic acid as a coating agent, average particle diameter: 500 nm, manufactured by Tanaka Kikinzoku Kogyo K.K.)

[Epoxy resin]

- Bisphenol A epoxy resin ("jER828EL", manufactured by Japan Epoxy Resin Co., Ltd., trade name, liquid at room temperature, epoxy gram equivalent = 185 g/eq, viscosity = 120 to 150 Pa·s (25°C))
- Bisphenol F epoxy resin ("jER806", manufactured by Japan Epoxy Resin Co., Ltd., trade name, liquid at room temperature, epoxy gram equivalent = 170 g/eq, viscosity = 30 to 45 Pa·s (25°C))

[Curing agent]

- 4,4'-Diaminodiphenyl sulfone (molecular weight: 248.3, manufactured by Tokyo Chemical Industry Co., Ltd.)
- 4,4'-Diaminodiphenyl ether (molecular weight: 200.2, manufactured by Tokyo Chemical Industry Co., Ltd.)
- 4,4'-Diaminodiphenylmethane (molecular weight: 198.3, manufactured by Tokyo Chemical Industry Co., Ltd.)
- 3,3'-Diaminodiphenyl sulfone (molecular weight: 248.3, manufactured by Tokyo Chemical Industry Co., Ltd.)
- 4,4'-Diamino-3,3'-dimethyldiphenylmethane (molecular weight: 226.3, manufactured by Tokyo Chemical Industry Co., Ltd.)
- 4,4'-Diamino-3,3',5,5'-tetraethyldiphenylmethane (molecular weight: 310.5, manufactured by Tokyo Chemical Industry Co., Ltd.)

[Additive]

- Resol-type phenolic resin ("MEH-8010H", manufactured by Meiwa Plastic Industries, Ltd., trade name, phenol gram equivalent: 130 g/eq)
- 2-Phenyl-4-methyl-5-hydroxymethylimidazole ("CUREZOL 2P4MHZ", manufactured by Shikoku Chemicals Corporation)

B. Properties and evaluation of physical properties of adhesive composition

1. State of adhesive composition before electrically conductive filler starts to sinter

Regarding the state of the adhesive composition during heat curing and before the electrically conductive filler started to sinter, the state of curing of the adhesive composition before the electrically conductive filler (A) started to sinter was observed. The results are shown in Table 1.

2. Curing ratio of adhesive composition at the time when growth rate of average particle diameter of electrically conductive filler reaches 30%

The curing ratio of the adhesive composition at the time when the growth rate of the average particle diameter

of the electrically conductive filler reached 30% was measured by the following method.

Namely, a portion of the adhesive composition was taken out at a point in time when the growth rate of the average particle diameter of the electrically conductive filler reached 30% (the weight (W0) thereof before solvent extraction and from which the weight of the electrically conductive filler had been subtracted was measured), then dissolution and extraction with tetrahydrofuran were performed, followed by drying, and then the weight (Wt) of the undissolved matter from which the weight of the electrically conductive filler had been subtracted was measured to perform calculation by the following formula. The results are shown in Table 1.

$$\text{Curing ratio (\%)} = (Wt/W0) \times 100$$

The growth rate of the average particle diameter of the electrically conductive filler was determined by calculation by the following formula, in which the value a was the average particle diameter of the electrically conductive filler before heating and the value b was the average particle diameter of the electrically conductive filler in the adhesive composition that was being cured by heat.

$$\text{Growth rate of average particle diameter of electrically conductive filler (\%)} = \{(b-a)/a\} \times 100$$

3. Measurement of thermal conductivity

In order to evaluate the thermal conductive properties of the adhesive composition, the thermal conductivity of the adhesive composition was measured. The thermal conductivity, $\lambda$, (W/m·K) was determined by measuring the thermal diffusivity, a, on a Laser Flash Method Thermal Constant Measurement System (TC-7000, manufactured by ULVAC-RIKO, Inc.) in accordance with ASTM-E1461, calculating the specific gravity, d, at room temperature by the pycnometer method, measuring the specific heat, Cp, at room temperature on a differential scanning calorimeter (DSC7020, manufactured by Seiko Instruments & Electronics Ltd.) in accordance with JIS-K7123, and performing calculation by the following formula. The results are shown in Table 1.

$$\lambda = a \times d \times Cp$$

4. Measurement of electrical conductivity

In order to evaluate the electrical properties of the adhesive composition, the electrical conductivity of the adhesive composition was measured. The electrical conductivity, K, (S/cm) was determined by measuring the resistance, R, generated on a direct-current voltage current source/monitor (R6243, manufactured by ADVANTEST Corporation) by the direct-current four-probe method and performing calculation by the following formula using the width, W, the thickness, T, and the length, L, of the sample for measurement. The results are shown in Table 1.

$$K = L/(R \times W \times T)$$

[Table 1]

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Electrically conductive filler (content: % by mass) | Silver powder (average particle diameter: 500 nm) | 80.0 | 86.2 | 75.8 | 93.7 | 79.7 | 81.6 | 80.0 | 80.0 | 80.0 | 80.0 | 85.7 | 80.0 |
| Epoxy resin (content: % by mass) | Bisphenol A epoxy resin | 15.0 | | 20.0 | 5.0 | 15.0 | 12.0 | 15.0 | 15.3 | 15.7 | 15.8 | 10.0 | 15.0 |
| | Bisphenol F epoxy resin | | 8.0 | | | | | | | | | | |
| Curing agent (content: % by mass) | **4,4'-**Diaminodiphenyl sulfone | 5.0 | 5.8 | 4.0 | | | | 4.5 | 3.0 | | | 1.3 | 4.5 |
| | Equivalent (molar equivalent) of active hydrogen relative to 1 molar equivalent of epoxy groups | 1.0 | 2.0 | 0.6 | | | | 0.9 | 0.6 | | | 0.4 | 0.9 |
| | **4,4'-**Diaminodiphenyl ether | | | | | | | | 1.7 | 4.3 | | | |
| | Equivalent (molar equivalent) of active hydrogen relative to 1 molar equivalent of epoxy groups | | | | | | | | 0.4 | 1.0 | | | |
| | **4,4'-**Diaminodiphenylmethane | | | | | | 1.3 | | | | 4.2 | | |
| | Equivalent (molar equivalent) of active hydrogen relative to 1 molar equivalent of epoxy groups | | | | | | 0.4 | | | | 1.0 | | |
| | **3,3'-**Diaminodiphenyl sulfone | | | | 1.0 | | | | | | | | |
| | Equivalent (molar equivalent) of active hydrogen relative to 1 molar equivalent of epoxy groups | | | | 0.6 | | | | | | | | |
| | **4,4'**-Diamino**-3,3'-**dimethyldiphenylmethane | | | | | 2.8 | | | | | | | |

(continued)

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| | Equivalent (molar equivalent) of active hydrogen relative to 1 molar equivalent of epoxy groups | | | | | 0.6 | | | | | | | |
| | **4,4'-**Diamino-3,3', 5,5'-tetraethyldiphenylmethane | | | | | 2.5 | 5.0 | | | | | | |
| | Equivalent (molar equivalent) of active hydrogen relative to 1 molar equivalent of epoxy groups | | | | | 0.4 | 1.0 | | | | | | |
| Additive (content: % by mass) | Resol-type phenolic resin (MEH-8010H) | | | | | | | 0.5 | | | | 3.0 | |
| | 2-Phenyl-4-methyl-5-hydroxymethylimidazole | | | | | | 0.1 | | | | | | 0.5 |
| | Butyl cellosolve acetate (solvent) | | | | 0.3 | | | | | | | | |
| State of adhesive composition before electrically conductive filler started to sinter | | Half-cured | Half-cured | Half-cured | Half-cured | Half-cured | Half-cured | Half-cured | Half-cured | Thoroughly cured | Thoroughly cured | Thoroughly cured | Thoroughly cured |
| Curing ratio of adhesive composition at the time when growth rate of average particle diameter of electrically conductive filler was 30% (%) | | 6% | 10% | 3% | 5% | 41% | 33% | 28% | 46% | 100% | 100% | 100% | 100% |
| Thermal conductivity (W/m·K) | | 7.1 | 5.5 | 4.0 | 7.0 | 2.5 | 3.1 | 6.2 | 4.0 | 1.8 | 1.8 | 1.9 | 1.8 |
| Electrical conductivity (S/cm) | | 6650 | 6148 | 4227 | 6340 | 3138 | 3820 | 6013 | 5480 | 4525 | 1492 | 3822 | 4040 |

The results above confirmed that the adhesive composition of the present invention had high thermal conductivity and consistent electrical conductivity.

## Claims

**1.** A thermally conductive, electrically conductive adhesive composition comprising:

(A) an electrically conductive filler,
(B) an epoxy resin, and
(C) a curing agent,

the electrically conductive filler (A) being a submicron fine silver powder with an average particle diameter of 300 to 900 nm said submicron silver powder being coated with a coating agent containing a carboxylic acid and the content of the fine silver powder being 75 to 94% by mass of the total amount of the thermally conductive, electrically conductive adhesive composition,
the content of the epoxy resin (B) being 5 to 20% by mass of the total amount of the thermally conductive, electrically conductive adhesive composition,
the curing agent (C) being a compound of Formula (I), (II), or (III), and the content of the compound being 0.4 to 2.4 molar equivalents in terms of equivalent of active hydrogen relative to 1 molar equivalent of epoxy groups in the epoxy resin (B), and
during heat curing and before the electrically conductive filler (A) starts to sinter, the thermally conductive, electrically conductive adhesive composition being in an uncured state or a half-cured state:

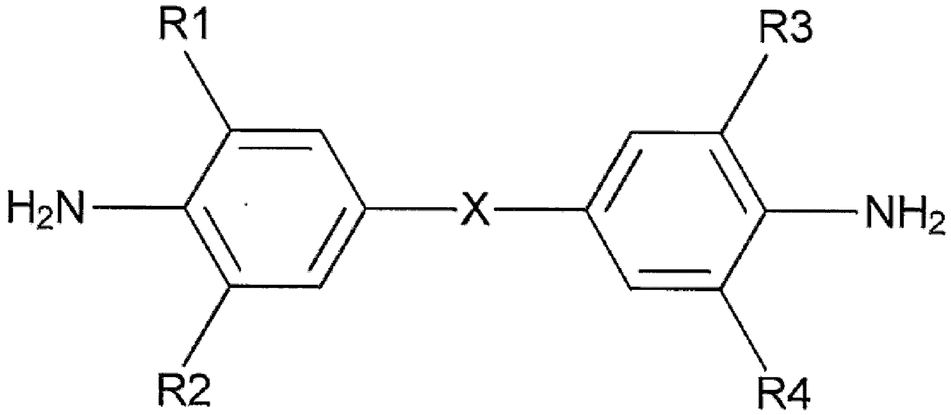

(I)

(wherein X is $-SO_2-$, $-CH_2-$, or -O-, and R1 to R4 are independently a hydrogen atom or a lower alkyl group),

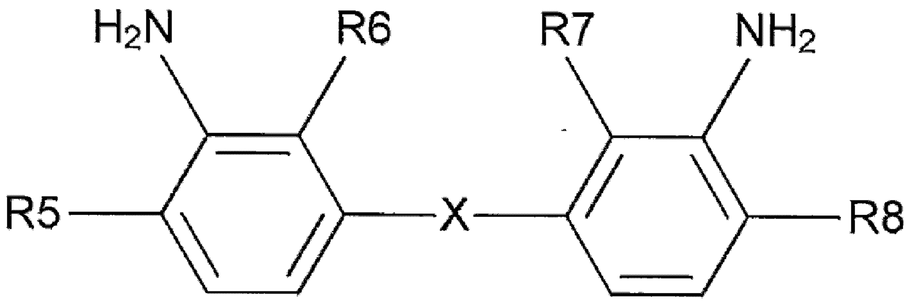

(II)

(wherein X is $-SO_2-$, $-CH_2-$, or -O-, and R5 to R8 are independently a hydrogen atom or a lower alkyl group), and

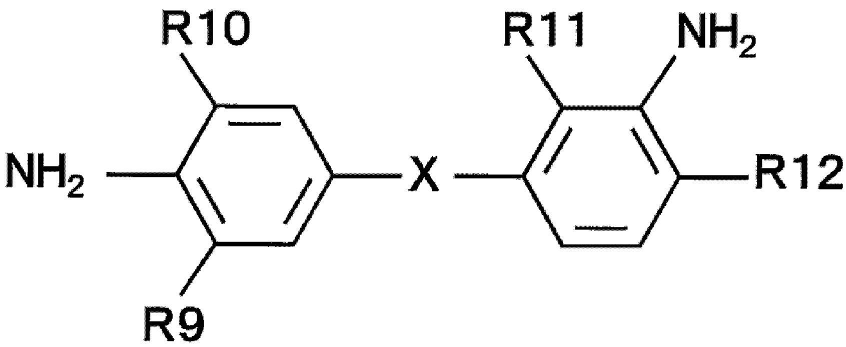

(III)

(wherein X is $-SO_2-$, $-CH_2-$, or -O-, and R9 to R12 are independently a hydrogen atom or a lower alkyl group).

2. The thermally conductive, electrically conductive adhesive composition according to claim 1, wherein the curing ratio of the thermally conductive, electrically conductive adhesive composition at the time when the growth rate of the average particle diameter of the electrically conductive filler reaches 30% during heat curing and after the electrically conductive filler (A) starts to sinter is 50% or lower.

3. The thermally conductive, electrically conductive adhesive composition according to claim 1 or 2, wherein the submicron fine silver powder as the electrically conductive filler (A) is coated with a coating agent on the surface, and the coating agent contains a higher fatty acid.

4. The thermally conductive, electrically conductive adhesive composition according to any one of claims 1 to 3, wherein the curing agent (C) is a compound of Formula (I), (II), or (III) wherein X is $-SO_2-$.

**Patentansprüche**

1. Thermisch leitfähige, elektrisch leitfähige Kleberzusammensetzung, umfassend:

(A) einen elektrisch leitfähigen Füllstoff,
(B) ein Epoxidharz und
(C) ein Härtungsmittel,

wobei der elektrisch leitfähige Füllstoff (A) ein feines Submikron-Silberpulver mit einem mittleren Teilchendurchmesser von 300 bis 900 nm ist, wobei das Submikron-Silberpulver mit einem Überzugsmittel, das eine Carbonsäure enthält, überzogen ist und der Gehalt des feinen Silberpulvers 75 bis 94 Massen-% der Gesamtmenge der thermisch leitfähigen, elektrisch leitfähigen Kleberzusammensetzung beträgt,
wobei der Gehalt des Epoxidharzes (B) 5 bis 20 Massen-% der Gesamtmenge der thermisch leitfähigen, elektrisch leitfähigen Kleberzusammensetzung beträgt,
wobei das Härtungsmittel (C) eine Verbindung der Formel (I), (II) oder (III) ist und der Gehalt der Verbindung 0,4 bis 2,4 molare Äquivalente als Äquivalent von aktivem Wasserstoff relativ zu 1 molaren Äquivalent von Epoxidgruppen im Epoxidharz (B) beträgt und
die thermisch leitfähige, elektrisch leitfähige Kleberzusammensetzung während der thermischen Härtung und vor Beginn der Sinterung des elektrisch leitfähigen Füllstoffs (A) in einem ungehärteten Zustand oder halbgehärteten Zustand vorliegt:

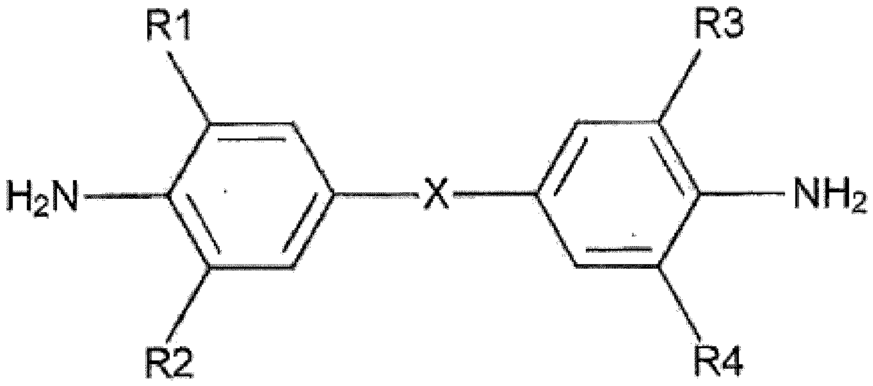

(I)

(wobei X = $-SO_2-$, $-CH_2-$ oder -O- ist und R1 bis R4 unabhängig ein Wasserstoffatom oder eine Niederalkylgruppe sind),

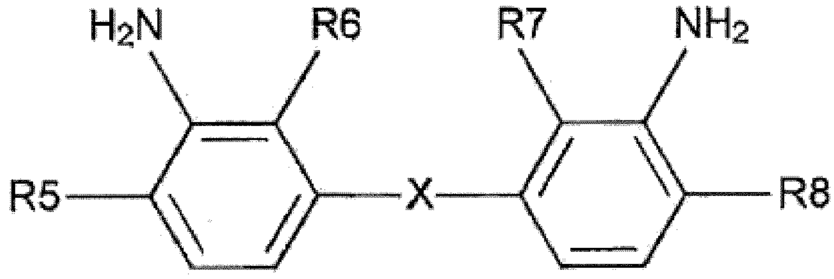

(II)

(wobei X = $-SO_2-$, $-CH_2-$ oder -O- ist und R5 bis R8 unabhängig ein Wasserstoffatom oder eine Niederalkylgruppe sind) und

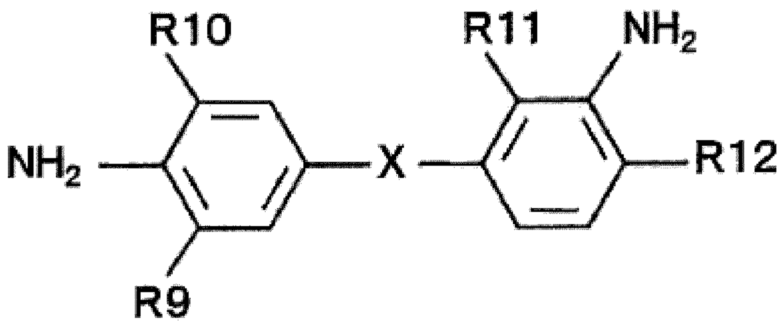

(III)

(wobei X = $-SO_2-$, $-CH_2-$ oder -O- ist und R9 bis R12 unabhängig ein Wasserstoffatom oder eine Niederalkylgruppe sind).

**2.** Thermisch leitfähige, elektrisch leitfähige Kleberzusammensetzung gemäß Anspruch 1, wobei das Härtungsverhältnis der thermisch leitfähigen, elektrisch leitfähigen Kleberzusammensetzung zu dem Zeitpunkt, wenn die Wachstumsrate des mittleren Teilchendurchmessers des elektrisch leitfähigen Füllstoffs während der thermischen Härtung und nach Beginn der Sinterung des elektrisch leitfähigen Füllstoffs (A) 30% erreicht, 50% oder weniger beträgt.

**3.** Thermisch leitfähige, elektrisch leitfähige Kleberzusammensetzung gemäß Anspruch 1 oder 2, wobei das feine Submikron-Silberpulver als elektrisch leitfähiger Füllstoff (A) auf der Oberfläche mit einem Überzugsmittel überzogen ist und das Überzugsmittel eine höhere Fettsäure enthält.

**4.** Thermisch leitfähige, elektrisch leitfähige Kleberzusammensetzung gemäß einem der Ansprüche 1 bis 3, wobei das Härtungsmittel (C) eine Verbindung der Formel (I), (II) oder (III) ist, wobei X = $-SO_2-$ ist.

## Revendications

**1.** Composition d'adhésif thermiquement conductrice et électriquement conductrice comprenant :

(A) une charge électriquement conductrice,
(B) une résine époxy, et
(C) un agent de durcissement,

la charge électriquement conductrice (A) étant une poudre d'argent fine submicronique avec un diamètre moyen de particule de 300 à 900 nm, ladite poudre d'argent submicronique étant revêtue d'un agent de revêtement contenant un acide carboxylique et la teneur en la poudre d'argent fine étant de 75 à 94 % en masse de la quantité totale de la composition d'adhésif thermiquement conductrice et électriquement conductrice,
la teneur de la résine époxy (B) étant de 5 à 20 % en masse de la quantité totale de la composition d'adhésif thermiquement conductrice et électriquement conductrice,
l'agent de durcissement (C) étant un composé de formule (I), (II), ou (III), et la teneur du composé étant de 0,4 à 2,4 équivalents molaires en termes d'équivalent d'hydrogène actif rapporté à 1 équivalent molaire de groupes époxy dans la résine époxy (B), et
pendant le durcissement à la chaleur et avant que la charge électriquement conductrice (A) ne commence à fritter, la composition d'adhésif thermiquement conductrice et électriquement conductrice étant dans un état non durci ou dans un état à demi-durci :

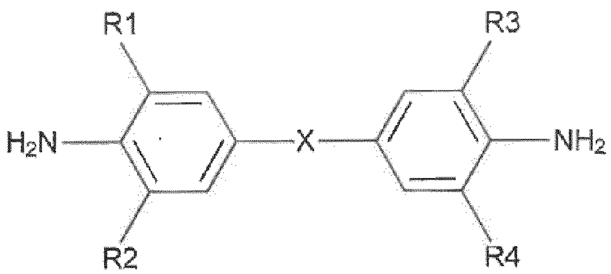
(I)

(dans laquelle X est $-SO_2-$, $-CH_2-$, ou -0-, et R1 à R4 sont indépendamment un atome d'hydrogène ou un groupe alkyle inférieur),

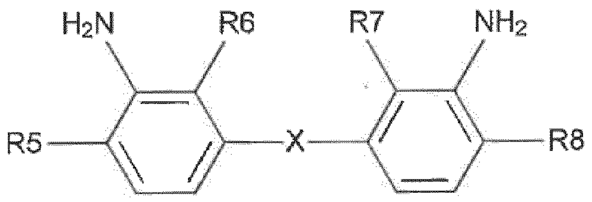
(II)

(dans laquelle X est $-SO_2-$, $-CH_2-$, ou -0-, et R5 à R8 sont indépendamment un atome d'hydrogène ou un groupe alkyle inférieur), et

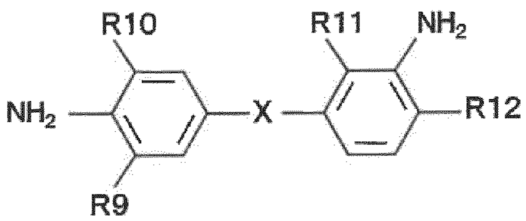
(III)

(dans laquelle X est $-SO_2-$, $-CH_2-$, ou -0-, et R9 à R12 sont indépendamment un atome d'hydrogène ou un groupe alkyle inférieur).

**2.** Composition d'adhésif thermiquement conductrice et électriquement conductrice selon la revendication 1, dans laquelle le rapport de durcissement de la composition d'adhésif thermiquement conductrice et électriquement conductrice au moment où le taux de croissance du diamètre moyen de particule de la charge électriquement conductrice atteint 30 % pendant le durcissement à la chaleur et après que la charge électriquement conductrice (A) commence à fritter est de 50 % ou moins.

**3.** Composition d'adhésif thermiquement conductrice et électriquement conductrice selon la revendication 1 ou 2, dans laquelle la poudre d'argent fine submicronique en tant que charge électriquement conductrice (A) est revêtue d'un agent de revêtement sur la surface, et l'agent de revêtement contient un acide gras supérieur.

**4.** Composition d'adhésif thermiquement conductrice et électriquement conductrice selon l'une quelconque des revendications 1 à 3, dans laquelle l'agent de durcissement (C) est un composé de formule (I), (II), ou (III) dans laquelle X est $-SO_2-$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008186590 A
- JP H6322350 B
- JP H6322350 A
- JP 2009084510 A